# EUROPEAN PATENT SPECIFICATION

(11) **EP 0 583 013 B1**
(45) Date of publication and mention of the grant of the patent: **09.07.1997**
(21) Application number: 93112969.6
(22) Date of filing: 12.08.1993
(51) Int. Cl.: B62J 1/16

(54) **Device for releasably attaching a kiddy seat and the like above the rear wheel of a bicycle**
Gerät zur demontierbaren Befestigung eines Kindersitzes und dergleichen über dem Hinterrad eines Fahrrads
Dispositif pour la fixation détachable d'un siège enfant et similaires au-dessus la roue arrière d'un bicyclette

(30) Priority: 12.08.1992 DE 4226713
(43) Date of publication of application: 16.02.1994
(73) Proprietor: HAMAX AS, Fredrikstad (NO)
(72) Inventor: Normann, Steinar, N-1258 Oslo (NO); Peters, Wolfram, NL-2311 CD Leiden (NL)
(74) Representative: Popp, Eugen, Dr.

(56) References cited:
- EP-A- 0 347 005
- DE-U- 8 511 417
- DE-U- 9 012 792
- DE-U- 9 204 494
- US-A- 4 030 648

## Description

The invention relates to a device for releasably attaching a kiddy seat, case-like container and the like above the rear wheel of a bicycle according to the preamble of claim 1.

One such supporting device is known, for example, from EP-A-0 390 332, US-A-4,051,985, US-A-3,802,598 or CA-A-1,213,510. These known devices each comprise two tubular steel brackets which are connected at one end to the rear wheel fork of the bicycle and at the other end to the saddle tube of the bicycle via connecting straps. Mutual support of the two supporting brackets is produced by the connection with a kiddy seat which is preferably configured as a bucket-type seat of plastic. For this purpose the bucket-type seat is bolted to the horizontally extending sections of the two supporting brackets. Also the connection of the supporting brackets at the rear wheel fork and at the aforementioned connecting straps is each made via a bolted joint with suitable firm clamping of the supporting brackets to the aforementioned members of the bicycle. The aforementioned connecting straps of the structure as disclosed in the EP-A-0 390 332 each comprise various adjustment holes so that they are longitudinally shiftable in relation to the horizontally extending sections of the two supporting brackets.

Installing, removing and adjusting this structure is relatively complicated. Special tools are required, such as screwdrivers, wrenches and/or pliers. The user is required to manipulate relatively many individual parts to make the installation and removal respectively. On top of this the stability of the known structure is exceedingly dubious. In conclusion these known structures also fail to be suitable for a biycle having a luggage carrier. The luggage carrier would stand in the way of fitting a kiddy seat of the known kind.

Accordingly special designs have been developed for bicycles having a luggage carrier such as e.g. the kiddy seat according to EP-A-0 232 800. In this case the kiddy seat is directly clamped to the luggage carrier. In addition the kiddy seat must be secured to the saddle tube of the bicycle via a connecting element to reliably prevent the kiddy seat from slipping off the luggage carrier. This known structure too is characterized by a plurality of individual parts and a correspondingly complicated installation procedure. On top of this wheel jolts are translated via the luggage carrier directly to the kiddy seat, the same applying to the structure according to the documentation cited at the outset.

In the EP-B-0 347 005 a kiddy seat is described which can be mounted above the luggage carrier of a bicycle, independently thereof. This bicycle seat is characterized for one thing by an extension piece disposed on the seating surface, said extension piece being connectable to the rear wheel fork of the bicycle via a bayonet-type lock and, for another, by a U-shaped bracket swivably disposed on the base of the seat, the free end of this bracket being bifurcated and clampable to the struts of the rear wheel fork (by screw clamps). This known kiddy seat has the inherent risk of the clamp attachment of the free ends of the swivel bracket becoming loose when subjected to heavy jolting. On top of this the connection of the kiddy seat to the rear wheel fork in the region between the bicycle saddle and the rear wheel is extremely problematic. In this region both the wheel brakes and the luggage carrier are connected to the rear wheel fork. In addition brake cables and electrical cables are installed in this region. On many bicycles, particularly sports models, no room is available for connecting a kiddy seat to the rear wheel fork. A connection to the saddle tube of the bicycle without making use of the rear wheel fork is not provided by the known design of the kiddy seat. To this extent, using the known kiddy seat according to EP-B-0 347 005 is substantially limited.

Also no means are provided of replacing the kiddy seat by a case-like container and the like. To this extent too, the known structure exhibits little flexibility.

Both in the DE-U-9 012 792 and in the DE-U-9 204 494 a supporting frame for a child's seat is described comprising a horizontally extending U-shaped bracket which is mounted above the rear wheel of the bicycle and on which said seat is mounted longitudinally shiftable. The two legs of said bracket are each extending forwardly wherein the two ends of said legs are each bent downwardly towards the saddle tube of the bicycle for securing the said saddle tube. This structure is quite simple, but doubtful with respect to comfort and safety. Above all, the said structure is quite limited with respect to the weight of the child or any other load to be mounted on the said bracket due to the fact that the said bracket is not additionally supported at the struts of the rear wheel fork.

The present invention is based on the object of creating a versatile device of the kind as defined in the preamble of claim 1 which is connectable to all sorts of bicycles, particularly to bicycles having a greatly differing angle between the rear wheel fork and the saddle tube, both easily and functionally reliable without obstructing the parts usually fitted in the region between the bicycle saddle and the rear wheel.

This object is achieved according to the invention by the characterizing features of claim 1.

Since the two fastener brackets for securing to the saddle tube of the bicycle are able to bypass the rear wheel fork, there is no obstruction of the fastening by brake, luggage carrier and similar parts secured between the bicycle saddle and rear wheel to the rear wheel fork. In addition the structure according to the invention is extremely flexible due to the fact that the fastener brackets which can be connected to the saddle tube of the bicycle are mounted on the supporting frame of the device so that each can be varied in length. The device according to the invention can thus be mounted so that the supporting frame for securing a kiddy seat, case-like container and the like extends roughly horizontal irrespective of the angle between the rear wheel fork or the struts thereof and the saddle tube of the bicycle and irrespective of the inclination of these latter two parts.

Due to the measures by which the fastener brackets are each curved downwards towards the saddle tube in the installed position and by which the fastener brackets formed in this way are each maintained rotatable about their longitudinal axes within their bearings on the supporting frame, installation and removal of the device according to the invention is additionally substantially facilitated. After the supporting struts of the device have been fastened to the two struts of the rear wheel fork the fastener brackets are turned so that their free ends point outwards. The device can then be swivelled forward about its connection to the struts of the rear wheel fork without the bicycle saddle getting in the way of the fastener straps. After passing the bicycle saddle the fastener straps are returned inwards so that their free ends come together on each other. Preferably in this position the free ends of the fastener brackets can be connected together in forming a roughly horizontally extending connecting member. The connection of the fastener brackets to the saddle tube is then made via this connecting member. For this purpose the connecting member features preferably hook-shaped latching projections which can be latched in a complementary opening of a support secured to the saddle tube, particularly as holding clips of plastic. As regards the details in the embodiment of connecting member and the holder reference is made to the claims 4 thru 7 and the description of the Fig. as follows.

In accordance with one preferred embodiment the section of the fastener brackets disposed longitudinally shiftable on the supporting frame is formed with transverse ribs in each case, whereby establishing the relative position between the fastener brackets and the supporting frame is done by means of holding clips effective between two neighboring transverse ribs. Instead of this a single means of clip location may also be provided by means of a clamp screw acting on the fastener bracket. The aforementioned non-positive means of location by means of holder clips has, however, the advantage that the holder clips can be applied and removed without the need of a special tool. In addition, this non-positive location of the fastener brackets on the supporting frame more reliable than plain clip locating under conditions of continuous loading and heavy jolting.

Of particular importance, i.e. even irrespective of the remaining design of the device claimed and described presently, is the fastening of the supporting struts to the two struts of the rear wheel fork via a non-positive lock which in its closed position permits swivelling of the supporting frame or device in the vertical plane or plane of the bicycle. Each lock comprises a latch, preferably a rotary latch, which in its open position opens up a receiving slot formed in the supporting strut to receive a pin, particularly a mushroom-headed pin, projecting outwardly and located on one side of the rear wheel fork and which in its closed position locks or closes off said receiving slot by forming a swivel bearing opening for the pin. For this purpose the latch is formed bucket-shaped. In the closed position the inner bucket surface forms part of a circular-cylindrical bearing surface, the other part of this bearing surface being defined by the inner end of the receiving slot in the supporting strut. The aforementioned bucket-type rotary latch is connected to a manipulator rotatably located in the supporting strut so that no special tool is required to actuate the aforementioned lock. Preferably, the rotary latch is latchable in the closed position. For this purpose the manipulator of the rotary latch e.g. features a latching projection assigned to a complementary latching opening on the supporting strut.

Securing a kiddy seat and the like to the upper side of the supporting frame is also done without the need of a tool. In one preferred embodiment the supporting frame features for this purpose at least one, preferably two, slot-like openings accessible from above, each having a relief to receive a toggle-like locking member arranged on the kiddy seat and the like. The locking members are part of the kiddy seat, the case-like container and the like. They each comprise an actuating lever projecting outwardly with which they can be disposed from the released position into the locked position and vice-versa, particularly rotatably.

To keep the number of rotary mounted locking members to a minimum the supporting frame is provided at its front end with at least one, particularly two insertion openings formed spaced away from each other to receive corresponding projections on the kiddy seat and the like. These two slot-like openings for receiving the locking members are then each formed in the region of the two rear corners of the supporting frame. In this way and after introducing the projections into the front receiving openings of the supporting frame a kiddy seat and the like can be tilted about them to the rear on the supporting frame. The kiddy seat can then be reliably attached to the supporting frame by means of the locking members.

To additionally safeguard attachment of the kiddy seat and the like to the supporting frame a substantially circumferential edge may be formed as a curb on the upper side of the supporting frame to receive the underside of the kiddy seat. Within these receiving means the kiddy seat is then reliably held on the sides. It is also feasible, of course, to form the aforementioned receiving means on the underside of the kiddy seat which then correspond with a suitable circumferential rear projection on the upper side of the supporting frame.

Of particular importance, i.e. again irrespective of the aforementioned supporting structure, are also the means according to claims 15 et seq which may find application in the case of a kiddy seat located behind or in front of of the handlebar.

In accordance with claim 15 the supporting struts each feature a plurality of hanger slots arranged one above the other and each extending more or less vertically for attaching a foot rest height-adjustably, the corresponding anchoring members being formed on the foot rest by an upper hook-like holding projection oriented upwards, a lower hook-like holding projection oriented downwards, and by a locking projection which can be introduced into a separate opening on the supporting strut of the supporting device or of the kiddy seat when the foot rest is in its attached position. This locking projection is preferably formed between the upper and lower holding projection, relative to which it is held pliantly so that for locating the foot rest on a supporting strut first the upper holding projection can be introduced into the corresponding hanger slot and which with hook attachment of the same with the foot rest is shiftable sufficiently upwards so that the lower holding projection can be introduced into the associated lower hanger slot, the foot rest then being shiftable downwards - with hook attachment also of the lower holding projection and simultaneous forcing-away of the locking projection by the facing limiting edge of the supporting strut - sufficiently until the foot rest comes into contact with the bottom edge of the assigned hanger slot by its lower holding projection and the locking projection latches in a correspondingly arranged locking opening in the supporting strut. In this arrangement the hook attachment between the upper holding projection and the assigned hanger slot is to be maintained. In this way the foot rest can be anchored at the required level resistant to jolting. This design may also be applied to conventional structures of a kiddy seat when the supporting struts or foot supports are suitably modified.

To ensure the aforementioned procedures when mounting the foot rest on the supporting strut of the supporting device the spacing between the hanger slot ends facing away from each other of each neighboring hanger slot on the one hand is made smaller than the spacing between the free ends of the two holding projections of each foot rest, but - on the other hand - greater than the spacing between the free end of the lower holding projection and the upper side of the raised face of the upper holding projection on the foot rest.

To permit withdrawing the locking projection from the assigned locking opening when the foot rest is shifted in position, an opening is provided in the foot rest through which, particularly by means of one finger, the locking projection is accessible and withdrawable from the locking opening in the supporting strut by overcoming its pliant preloading. The locking projection is preferably formed at the upper end of a strap configured in the rear wall of the foot rest, the aforementioned access opening being located directly above the upper end of this strap. By these means the upper end of the strap can be engaged behind by one finger and the locking projection is withdrawable from its opening in the supporting strut by overcoming the flexural pliancy of the strap.

The foot rest may be configured in the form of a bucket quadrant, a foot strap being formed integral on one sidewall. This foot strap which is placed over the arch of the child's foot, features preferably transverse ribs and is introducable into a slot-like opening on the opposing sidewall and hookable therein by means of the transverse ribs. The foot rest together with the foot strap is produced as an integral plastic component.

The supporting frame including the supporting struts is also preferably produced integrally in plastic. The fastener brackets too may also consist of tubular plastic, instead of which tubular light-alloy, particularly tubular aluminum, is feasible.

The saddle tube support for the fastener brackets, the kiddy seat, case-like container and the like are also preferably made of plastic. In this way an overall structure is achieved which all-in-all is exceedingly light, but nevertheless rugged and functionally reliable.

In the following a preferred embodiment of a supporting device formed in accordance with the invention for a kiddy seat is explained in more detail with reference to the attached drawing in which:
- Fig. 1: is a perspective overall view of a supporting device fitted to a bicycle according to the invention together with the kiddy seat;
- Fig. 2: is a schematic side view of the supporting device according to the invention, in which covering parts have been left out to better illustrate the principle according to the invention;
- Fig. 3: is a front view of the one fastener bracket provided according to the invention;
- Fig. 4: is a front view of the other fastener bracket provided according to the invention;
- Fig. 5: is a side view of a holder clip assigned to the fastener brackets for establishing the relative position within the supporting frame;
- Fig. 6: is a plan view of the holder clip fastenable to the supporting tube of the bicycle for connecting the fastener brackets;
- Fig. 7: is a side view of the holder clip shown in Fig. 6;
- Fig. 8: is a front view in partial section of the supporting frame including the supportings struts;
- Fig. 9: is a plan view on a greater scale of part of the means for fastening the supporting struts of the supporting device according to Fig. 2 to the two struts of the rear wheel fork;
- Fig. 10 thru Fig. 12: are each perspective views of the means for fastening the supporting struts of the supporting device to the two struts of the rear wheel fork in illustrating three different positions of a bucket-type rotary latch;
- Fig. 13: is a plan view of a kiddy seat adapted to the supporting device according to the invention;
- Figs 14a, 14b, and 15a, 15b: are each plan views in schematic partial section of a locking mechanism for locating a kiddy seat and the like on the supporting frame of the supporting device shown in the open position (Figs. 14a, 14b) and in the locked position (Figs. 15a, 15b);
- Fig. 16: is a longitudinal view of a foot rest configured according to the invention;
- Fig. 17: is a magnified section view of a part, namely an anchoring part of the foot rest according to Fig. 16;
- Fig. 18: is a front view of the foot rest according to Fig. 16 and
- Fig. 19: is a section along the longitudinal line XIX-XIX of the foot rest shown in Fig. 16.

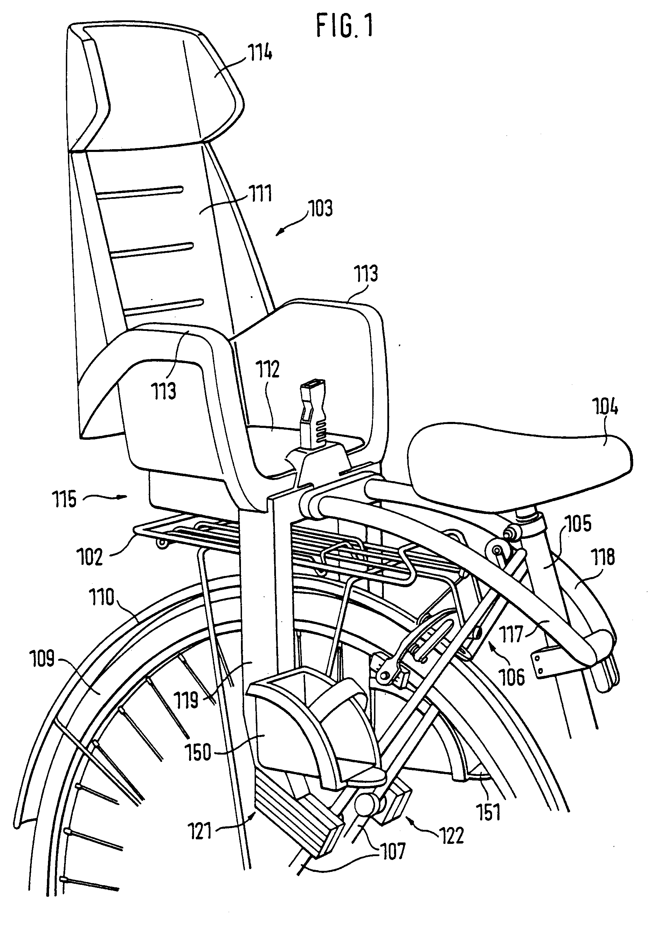

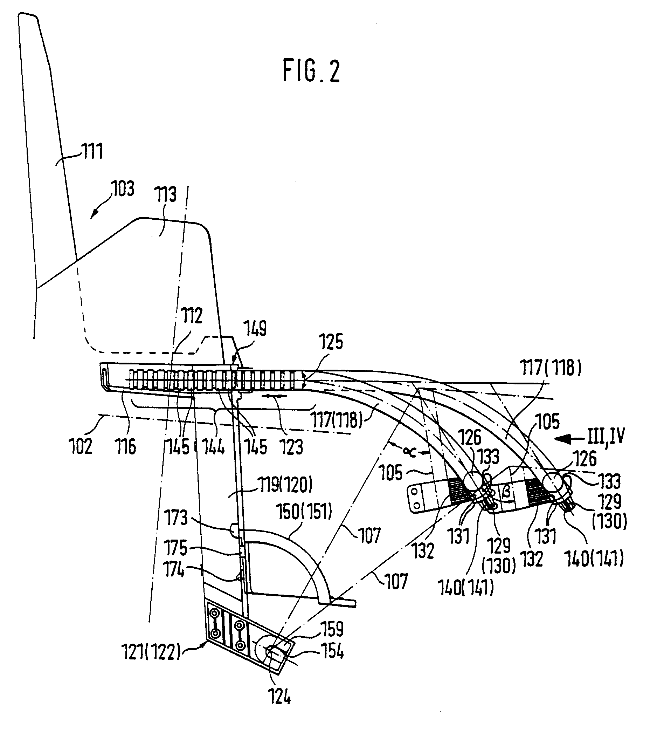

Fig. 1 shows the rear part of a bicycle 101 having a kiddy seat 103 mounted above a luggage carrier 102 in a perspective view whereby the bicycle saddle is identified by the reference numeral 104, the saddle tube assigned to this saddle as part of the bicycle frame by the reference numeral 105, the rear wheel fork by the reference numeral 106, the two struts of the rear wheel fork 106 by the reference numeral 107, the brake (wheel brake) connected in the region of the rear wheel fork 106 below the bicycle saddle 104 by the reference numeral 108, the rear wheel by the reference numeral 109, the mudguard assigned to this rear wheel by the reference numeral 110, the backrest of the kiddy seat 103 by the reference numeral 111, the seating surface of the kiddy seat by the reference numeral 112, the two arm rests of the kiddy seat by the reference numeral 113, a head rest connected above the back rest 111 by the reference numeral 114, and a means for releasably attaching the kiddy seat 103 above the rear wheel 109 or the luggage carrier 102 by the reference numeral 115. The aforementioned supporting device 115 comprises according to Fig. 2 a supporting frame 116 extending roughly horizontally above the rear wheel or above the luggage carrier 102 indicated by the dot-dashed line in Fig. 2, two forward-oriented fastener brackets 117,118 connectable to the saddle tube 105 of the bicycle 101, and two supporting struts119, 120 which are fastenable by their free or lower ends 121, 122 to the two struts 107 of the rear wheel fork 106 of the bicycle 101. The fastener bracket 117, the supporting strut 119 and the lower end 121 assigned to this supporting strut 119 each extend in the forward direction on the right-hand side of the bicycle center plane defined by the bicycle frame and the two wheels, whilst the fastener bracket 118, the supporting strut 120 and the lower end 122 assigned to the latter are each located on the left-hand side of the bicycle. As stated above and as is evident particularly well from Fig. 2 the two fastener brackets 117, 118 for securing to the saddle tube 105 bypass the rear wheel fork 106 so that connecting the fastener brackets to the saddle tube 105 can be made without being obstructed by connecting parts on the rear wheel fork 106 between the bicycle saddle 104 and the rear wheel 109. This region is exceptionally cramped as is clearly evident from Fig. 1, this applying in particular to sports bicycles such as mountain bikes and the like. On bicycles of this type there is hardly any possibility of a connecting a kiddy seat to the rear wheel fork in the region between the saddle and the rear wheel of the bicycle. On top of this it is very often the case that gearshift, brake and electrical cables are routed in this region. It is also very often the case that a bicycle lock is connected in this region. Any universally usable connection for a kiddy seat cannot be employed on such bicycles. For this reason a design has been selected in which the kiddy seat is connectable, among other things by bypassing the rear wheel fork, to the saddle tube 105 of the bicycle frame which is stiffer in any case, i.e. without obstruction both by conventional connecting parts of the bicycle and without obstruction to the cyclist. When fitted the fastener brackets 117, 118 are oriented to closely bypass the two struts 107 of the rear wheel fork 106 below the bicycle saddle 104. More specifically, when fitted the fastener brackets 117, 118 are each curved downwards and towards the saddle tube 105, thus preventing any obstruction by the fastener brackets for both the cyclist and for such conventional connecting parts of the bicycle as the brakes, bicycle lock, luggage carrier and the like.

To adapt the aforementioned supporting device 115 to the various sizes of bicycle as well as to differences in the angle between the saddle tube 105 and the struts 107 of the rear wheel fork 106 the two fastener brackets 117, 118 are each mounted longitudinally shiftable on the supporting frame 116. This longitudinal shift ability is indicated in Fig. 2 by the double arrow 123. In addition, two different positions of the fastener brackets 117, 118 relative to the supporting frame 116 are illustrated in Fig. 2, i.e. in adapting to the difference in the angles *a* and *b* respectively between the saddle tube 105 and the struts 107 of the rear wheel fork 106 with no change in the connecting point 124 of the two supporting struts 119, 120 of the supporting frame 116 on the two struts 119, 120 of the rear wheel fork 106. Accordingly, the high flexibility of the described supporting frame 115 in adapting to the various designs of bicycle is very clearly evident from Fig. 2.

To further facilitate installing the supporting frame 116 for the kiddy seat 103 the two fastener brackets 117, 118 are each held rotatable about their longitudinal axes on the supporting frame 116. This ability to rotate is indicated in Fig. 2 by the double arrow 125.

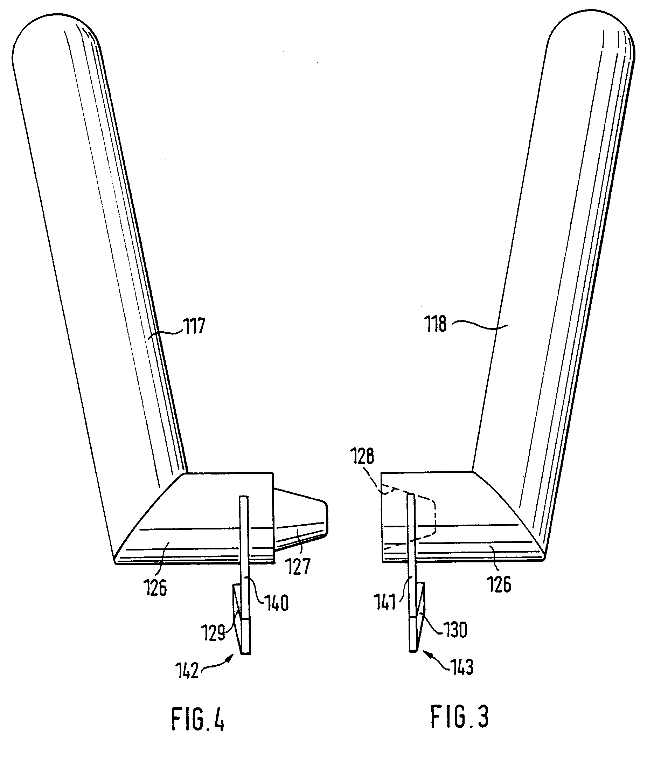

For the purpose of installing and removing the supporting device 115 the fastener brackets 117, 118 are each turned within their bearings on the supporting frame 116 so that their saddle tube connecting ends each face outwardly. Then the supporting frame 116 can be swivelled about the connecting point 124 on the struts 107 of the rear wheel fork 106 into the installation or removal position without being obstructed by the bicycle saddle 104 and the like. The fastener brackets 117, 118 are preferably made of tubular plastic or light-alloy. In the Figs. 3 and 4 each of the fastener brackets 117, 118 are illustrated in the front view, i.e. in the direction III and IV resp. in Fig. 2. From this illustration it is clearly evident that the free or saddle tube connecting ends of the fastener brackets 117, 118 can each be connected to the other, namely plugged together in forming a pin or tube-like connecting section 126 extending horizontally. For this purpose the fastener brackets 117, 118 are each bent at their front ends and capable of being plugged together to form the horizontal connecting section 126 (projection 127 in the form of truncated cone at the free forward end of the partial section of the connecting section 126 assigned to the fastener bracket 117; complementary recess 128 on the free forward end of the partial section of the connecting section 126 assigned to the fastener bracket 118.

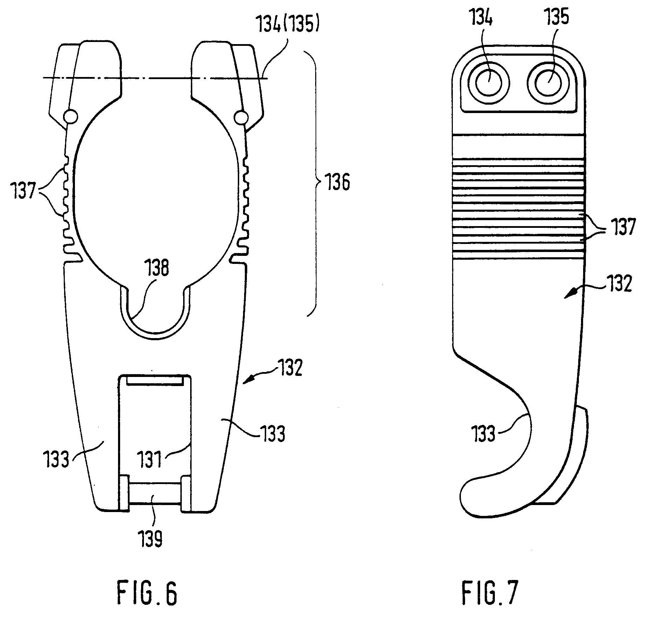

As is further evident from Figs. 2 thru 4 the connecting section 126 features hook-like latching projections 129 and 130 resp. which are latchable in a complementary opening 131 of a support 132 secured to the saddle tube 105. In the assembled position the connecting section extending transversely to the plane of the bicycle or extending horizontally is in contact with a semi-bucket shaped supporting surface 133 of the support 132. In this arrangement the two latching projections 129, 130 are in the latching position within the latching opening 131. The semi-bucket shaped supporting surface 133 of the support 132 is located at the end of the saddle tube 105 opposite the supporting frame 116 or at the front end. The latching opening 131 is formed more or less centrally in the region of the supporting surface 133. In Figs. 6 and 7 the support 132 is shown both in the side view and in the plan view. Accordingly this involves a kind of clip made of plastic and the like which can be clamped to the saddle tube 105 by bolting. The corresponding bolt holes are identified by the references numerals 134, 135 in Figs. 6 and 7.

To permit the support to be clamp-mounted on the saddle tube 105 the two arms of the clip section 136 of the support 132 gripping the saddle tube 105 are provided with less material, i.e. more specifically slightly thinner walled and with ribs 137. In the front region of the clip section 136 the opening for the saddle tube 105 is followed by a recess 138 for passing through electric cables and the like so that the routing of such cables is not obstructed by the fastening of the support 132 on the saddle tube 105.

The front end of the latching opening 131 is limited by a cross-pin 139 about which a locking hook (not shown) is free to swivel and by means of which the latching connection between the fastener brackets 117, 118 and the support 132 can be locked.

In accordance with Figs. 2 thru 4 the hook-like latching projections 129, 130 are formed namely as integrally molded bending straps 140, 141 arranged on the connecting section 126, these bending straps 140, 141 extending parallel to the center plane of the bicycle. In their assembled condition or latching position the free ends of the bending straps 140, 141 project as shown in Fig. 2 from the side opposite the insertion side, namely from the lower side of the latching opening 131 formed in the support 132 so that by bending the protruding ends towards each other the latching projections 129, 130 can be brought into their latching position. This bending towards each other of the ends of the bending straps 140, 141 carrying the latching projections 129, 130 protruding from the latching opening is indicated by the arrows 142, 143 in Figs. 3 and 4. Naturally the latching projections 129, 130 in this embodiment are then each arranged on the outer sides of the two bending straps 140, 141.

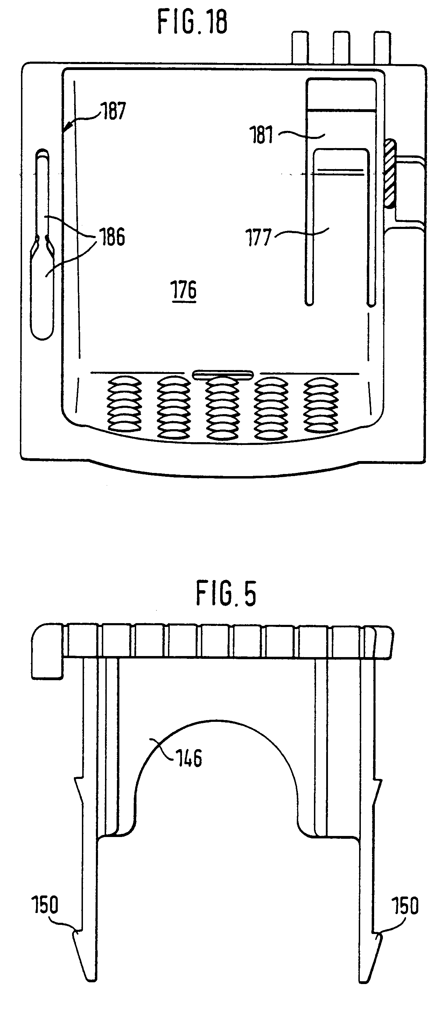

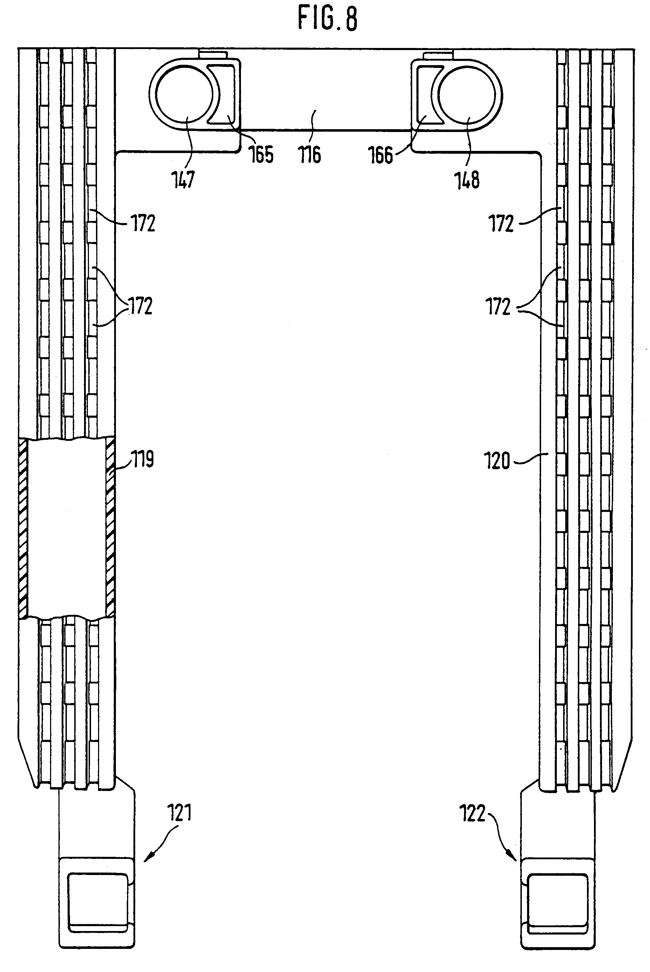

As already stated above the fastener brackets 117, 118 are mounted longitudinally shiftable on the supporting frame 116 to adapt to the differing configurations of the wheels and frame of the bicycle. The longitudianally shiftable mounted sections 144 of the two fastener brackets 117, 118 are each configured with transverse ribs (Fig. 2), locating the position of each fastener bracket relative to the supporting frame being achieved by means of holding clips 146 (see Fig. 5) effective between two neighboring ribs 145. The holding clip 146 can be anchored in the supporting frame 116, i.e. within an insertion opening 149 extending crosswise to the receiving opening 147 and 148 in each case (see Fig. 8) for the fastener brackets 117, 118 resp. (Fig. 2) in the supporting frame 116. For latching the holding clip 146 its arms are each provided with latching projections 150 corresponding with complementary latching openings in the supporting frame 116. The upper side of the clips 146 is configured so that they each come to rest flush with the upper side of the supporting frame 116 in the latching position.

From Fig. 8 it is further evident that the supporting frame 116 including the supporting struts 119, 120 is made in one piece of plastic, whereby each of the supporting struts 119, 120 is formed as square hollow sections. At the front ends of each of the two supporting struts 119, 120 hanger slots are formed at a predetermined space from each other which in the installed condition of the supporting frame vertically extend in the longitudinal direction of support. As regards the function of these hanger slots reference is made to the details provided further on. These serve to attach foot rests 150, 151.

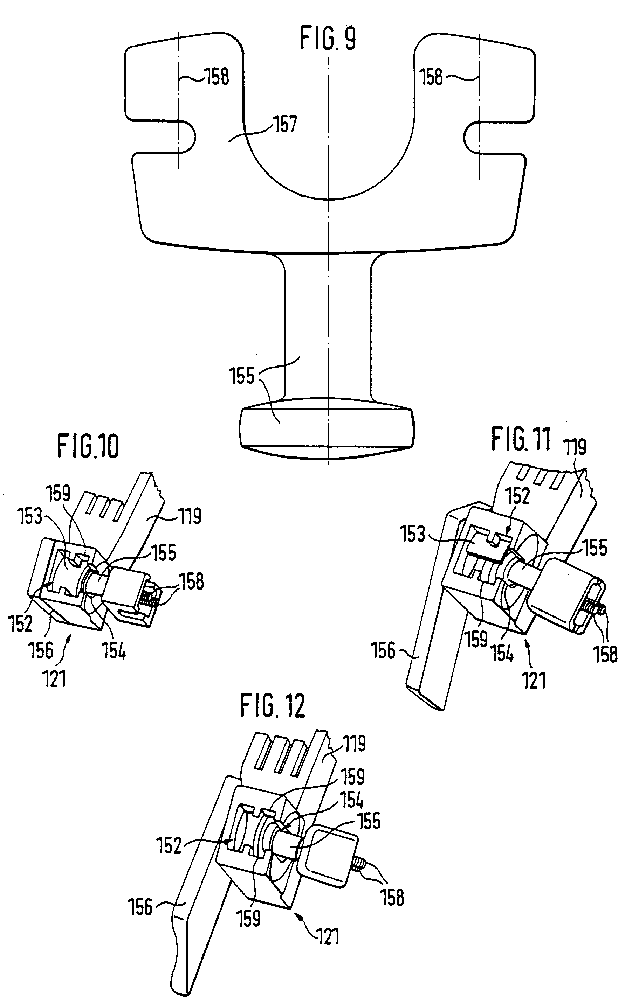

Fastening the supporting struts 119, 120 to the two struts 107 of the rear wheel fork 106 is done in each case via a non-positive action lock 152 which in the closed position (Fig. 10) defines the connecting point of the supporting frame 115 on the supporting strut 107 of the rear wheel fork 106 and permitting swivelling of the supporting frame 116 in the vertical (bicycle) plane about this connecting point. As shown in Figs. 10 thru 12 each lock 152 comprises a rotary latch 153 which in the open position (Fig. 12) opens up a receiving slot 124 ( see Figs 2, 10 thru 12) formed on the lower free end 121 and 122 resp. of the supporting struts 119 and 120 for a pin projecting outwardly on the side on the assigned strut 107 of the rear wheel fork 106, particularly a mushroom-head pin 155 (see also Fig. 9) and which in the closed position (see Fig. 10) or in the semi-closed position (see Fig. 11) closes off this receiving slot 154 by forming a swivel bearing opening for the pin 155 ( see Fig. 10).

The rotary latch 153 which is configured as a circular bucket section is connected to a manipulator 156. This manipulator 156 also functions as an outer screen for the lower free end 121 and 122 resp. of each supporting strut 119, 120. In the closed position of the rotary latch 153 the manipulator 156 is located as shown in Fig. 10 in a covering position. In this position the manipulator 156 and thus also the rotary latch 155 is preferably latched. The corresponding latching arrangement is not indicated in finer detail in Figs 10 to 12 since the arrangement concerned is known as such.

The mushroom-headed pin 155 is further provided with a U-shaped connecting part 157 by means of which fastening of the associated strut 107 of the rear wheel fork 106 is made. The counterpart thereof is not shown in finer detail in the Figures which, in any case, is bolted to the free ends of the two arms of the U-shaped connecting part 157. The corresponding threaded pins 158 are securely embedded in the connecting part 157. In Fig. 9 these threaded pins 158 are merely indicated by their center lines.

The connecting part 157 may be produced integral with the mushroom-headed pin 155 in plastic or metal. When made of plastic the aforementioned threaded pins 158 are molded in place resistant to turning and tension. In conclusion it is to be noted that that the receiving slots 154 are each provided with an undercut 159 to receive the mushroom-head shaped end of the pin 155.

Due to the fact that the mushroom-headed pin 155 is held exclusively non-positively within the lock 152 there is no danger of this joint becoming accidentally loose due to heavy jolting and the like. The known positive-action clamp joint is thus replaced a purely non-positive joint in the described embodiment. Accordingly there is no danger of heavy jolting releasing the joint as would certainly be possible in the case of a simple clamp joint. In this way the supporting frame 116 can thus be reliably secured to the struts 107 of the rear wheel fork 106.

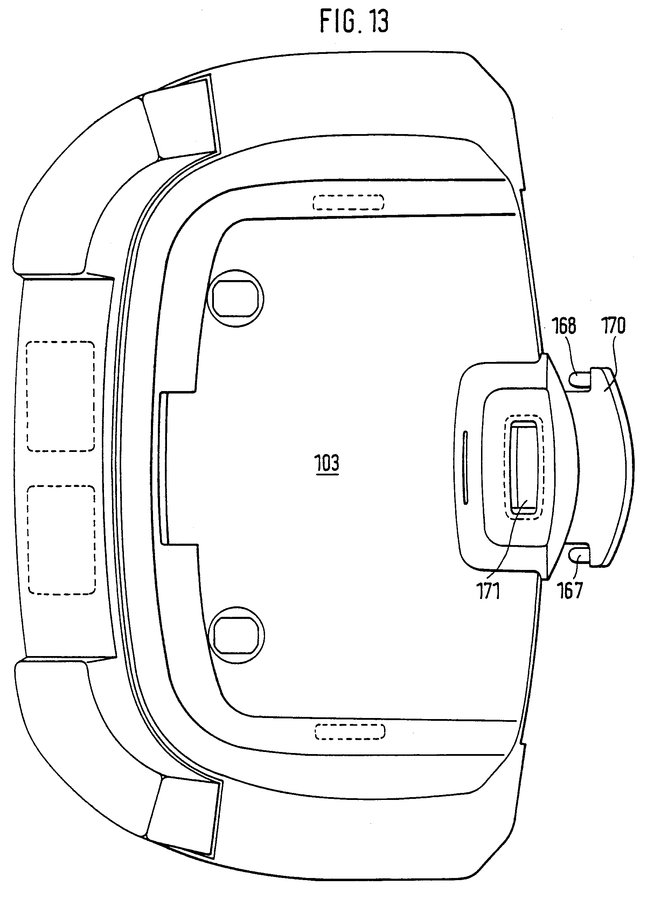

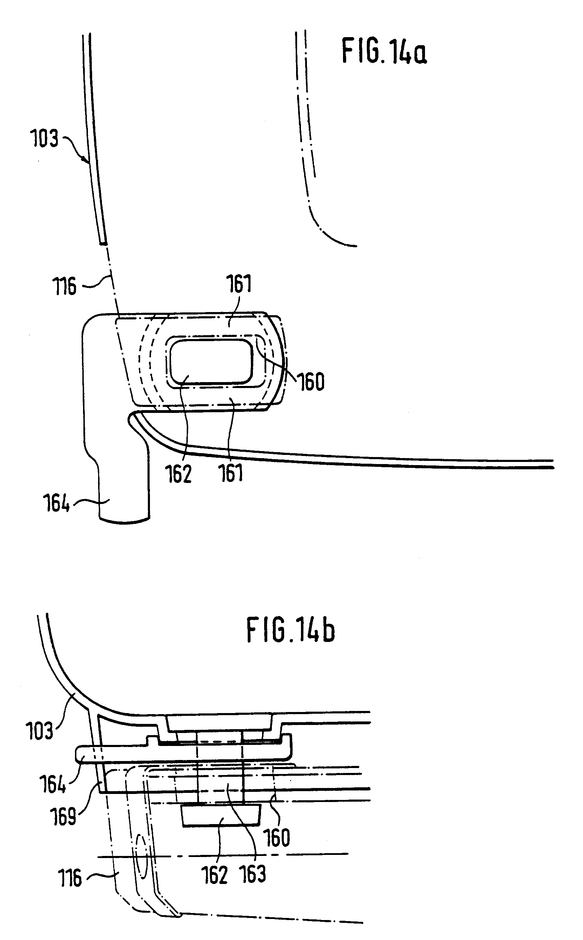

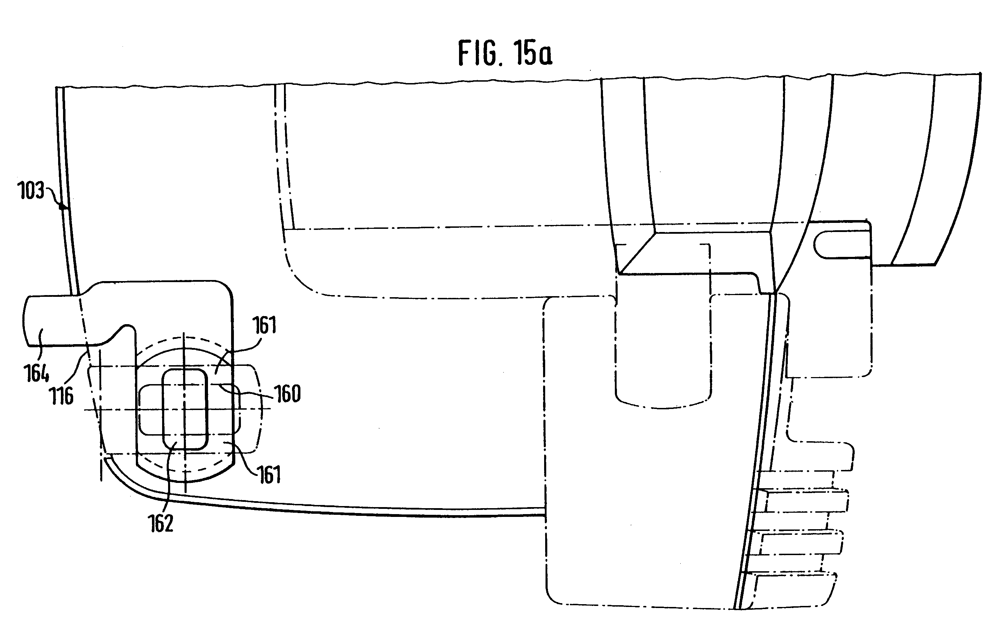

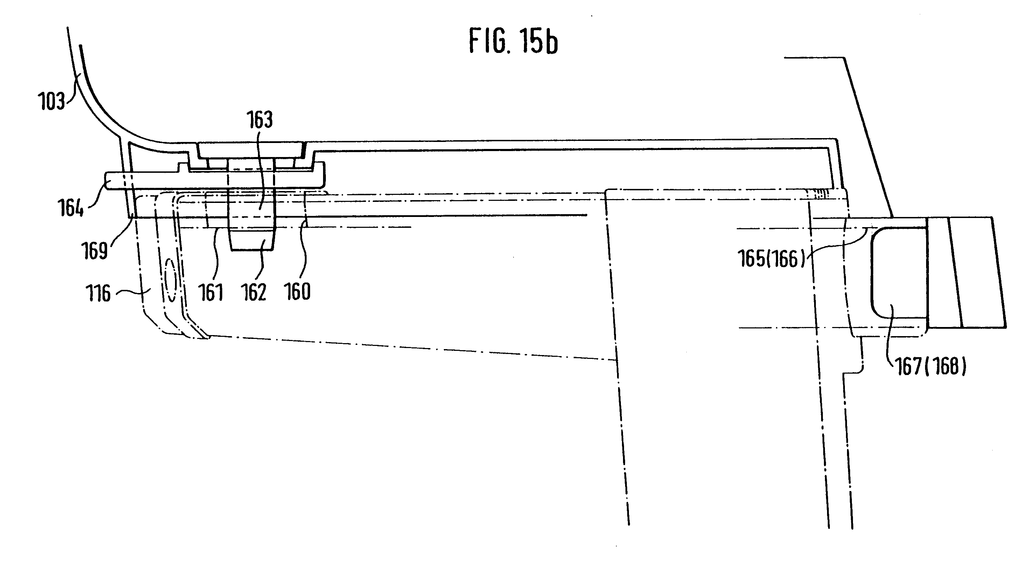

As shown in Figs. 14a, 14b, 15a and 15b in conjunction with Fig. 13 the supporting frame 116 features at its two rear corners a total of two slot-like openings 160 which are accessible from above, each provided with an undercut 161 to receive a toggle-like locking member 162 arranged on the kiddy seat 103. The locking toggles 162 are rotatably mounted on the base of the kiddy seat 103 or alternatively on the base of a case-like container and the like so that they are located at a distance below the underside of the base of the kiddy seat 103 and insertable in the slot-like openings 160 of the supporting frame 116. Here of course, they can only be inserted in these slot-like openings 160 when they are located in a position parallel to the longitudinal extension of the slot-like opening 160 (Figs. 14a, 14b). The rotary axes 163 with which the locking toggles 162 are jointed are each connected to a locking lever 164 accessible from the exterior with which the double-hammer shaped locking toggles can each be swivelled thru 90°, i.e. - after being introduced into the slot-shaped receiving openings 160 - into a locking position as shown in Figs. 15a, 15b in which they are rotatable and in which the free ends of the locking toggles 162 engage from underneath the undercuts 161 assigned to the slot-like openings 160.

As is evident from both Fig. 8 and Fig. 15b the supporting frame 116 features at its front end two insertion openings 165, 166 spaced away from each other to receive suitable projections 167, 168 oriented to the rear on the kiddy seat 103. To fit the kiddy seat 103 on the supporting frame 116 first the projections 167, 168 are introduced into the forward insertion openings 165. 166 of the supporting frame 116. The kiddy seat 103 is then tilted about the insertion openings 165, 166 to the rear on the supporting frame 116 and simultaneously the locking toggles 162 introduced into the corresponding receiving openings 160 on the upper side of the supporting frame 116 as illustrated in Figs. 14a, 14b. To finally locate the kiddy seat 103 on the supporting frame 116 the locking levers 164 are then swivelled from the position shown in Figs. 14a, 14b into a locking position as shown in Figs. 15a, 15b. The locking levers 164 preferably latch in the position as shown in Figs. 15a, 15b so that the kiddy seat 103 is reliably held on the supporting frame 116. For this purpose the underside of the kiddy seat 103 additionally features a substantially circumferential edge 169 formed as a curb within which the upper side of the supporting frame 116 is held. Just as feasible is an inverse configuration in which a circumferential edge is formed on the upper side of the supporting frame 116 within which the underside of the kiddy seat is reliably held in all horizontal directions in the aforementioned way. The two aforementioned projections 167, 168 are formed on a front projection 170 of the base of the kiddy seat 103. This projection is integrally connected to the kiddy seat 103. In addition, a connection 171 for a seat belt (not shown) is provided in the middle of the front edge area of the base of the kiddy seat 103.

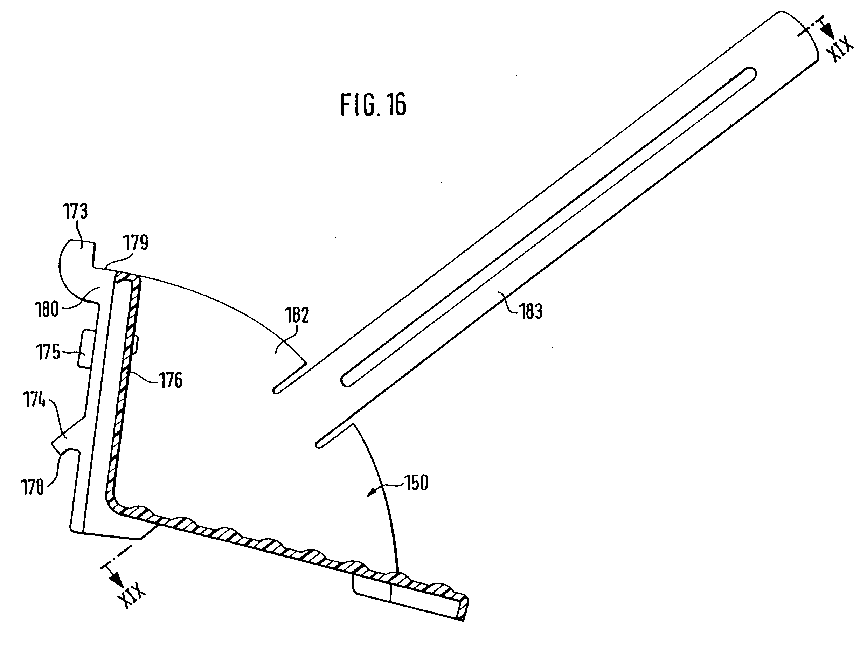

With reference to Figs. 16 thru 19 a particularly advantageous embodiment of a foot rest 150 (including the opposite foot rest 151) will now be detailled which can also be employed independently of the aforementioned structure of a supporting device for a kiddy seat. To this extent patenting thereof is also herewith claimed independently.

As already explained above with reference to Fig. 8 both of the supporting struts 119, 120 feature a plurality of hanger slots 172 located one above the other and each extending in the longitudinal direction of the supporting struts and vertically respectively for height-adjustable hanging attachment of the foot rests 150 and 151 resp., whereby the corresponding anchoring members are formed on the foot rests 150 and 151 resp. by an upper hook-like holding projection 173 oriented upwards, a lower hook-like holding projection 174 oriented downwards and by a locking projection 175 which can be introduced in the hanging position of the foot rest into a separate opening, in this case also hanger slot 172.

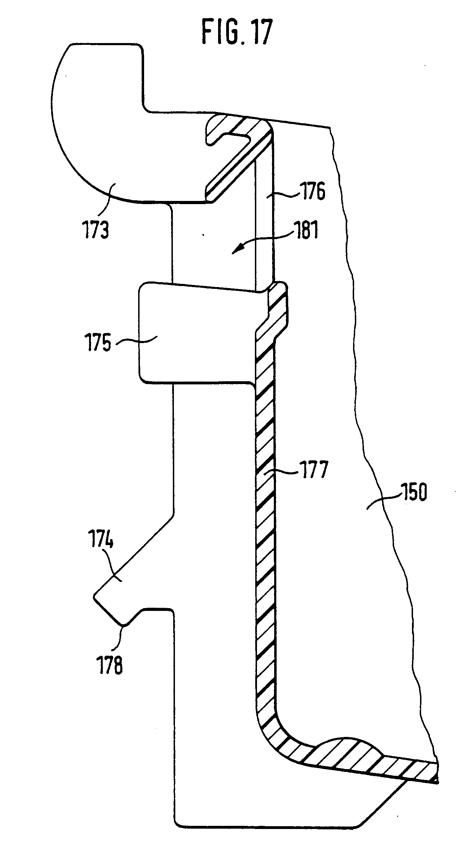

As is evident from Figs. 16 and 17 the locking projection 175 is formed between the upper and lower holding projection, relative to which it is held pliantly, so that for locating the foot rest 150 and 151 resp. at each supporting strut 119 and 120 resp. first the upper holding projection 173 can be introduced into the corresponding hanger slot 172 and shifted upwards whilst hooking therein together with the foot rest, whereby the lower holding projection 174 can also be introduced into the corresponding lower hanger slot 172 so that then the foot rest 150 and 151 resp. - with simultaneous hook attachment also of the lower holding projection and forcing-away of the locking projection 175 by the facing limitation of the supporting strut 119 and 120 resp. - can be shifted sufficiently downwards until the foot rest 150 and 151 resp. engages the lower edge of the assigned hanger slot 172 by its lower holding projection 174 and the locking projection 175 snaps into place in a correspondingly assigned locking opening or in a hanger slot 172 located inbetween.

The foot rest 150 and 151 resp. is each produced as a bucket quadrant of plastic. The aforementioned holding projections including the locking projection are integral components of the foot rest. In addition the locking projection 175 is formed at the upper end of a strap 177 stamped in the rear wall or - in the fitted position - in the wall 176 adjoining the supporting strut 119 and 120 resp., particularly molded therein and oriented in the direction of the foot rest. By the way it is formed and particularly due to its length and because of the material used for the foot rest (plastic) this strap 177 is pliant, thus making installation of the foot rest 150 and 151 resp. possible.

Due to the locking projection 175, the length of which roughly corresponds to the length of the hanger slot 172, it is assured that the foot rests 150, 151 remain reliably anchored even when subjected to heavy jolting and also even when not in contact with the child's foot which is very often the case with restless children.

It is furthermore important for the aforementioned installation and, of course, also for the removal of the foot rests 150, 151 that the distance between the hanger slot ends facing away from each other of the hanger slot assigned on the one hand to the upper holding projection and that assigned on the other to the lower holding projection is - again on the one hand - smaller than the distance between the free ends of the two holding projections and - again on the other - is greater, however, than the distance between the free end 178 of the lower holding projection 174 and the upper side 179 of the raised face 180 of the upper holding projection 173. Dimensioning the spacing in this way permits hanging and anchor attachment of the foot rest 150 and 151 resp. on the supporting struts 119, 120 as described above. Removal of the foot rest 150 and 151 resp. is done in the reverse sequence.

Above the pliant strap 177 an opening 181 is provided in the foot rest and Its rear wall 176 resp. through which the locking projection and the upper end of the strap 177 carrying the locking projection 175 resp. is accessible e.g. by one finger and the locking projection 175 is withdrawable from the assigned locking opening, which in this case is the assigned hanger slot 172 by overcoming the pliant preloading of the strap 177 carrying the locking projection 175.

As evident from Figs. 16 and 19 the foot rest 150 and 151 resp. is formed as a kind of bucket quadrant of plastic, a foot strap 183 being intregally molded on a sidewall 182 - the sidewall facing the rear wheel in each case when the foot rest is installed. As evident from Fig. 19 the foot strap 183 is provided with transverse ribs 184 to reduce its flexural rigidity or to provide it with a flexural rigidity corresponding to that of a leather strap and the like. With its free end 185 leading, the foot strap 183 can be introduced into a slot-like opening 186 in the opposite sidewall 187 - the exterior sidewall in each case when the foot rest is installed - in which it can be hooked by means of the transverse ribs 184.

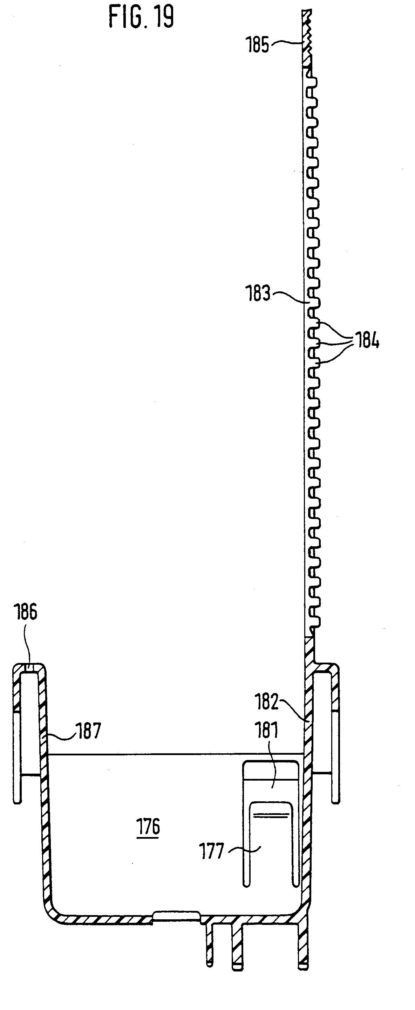

The upper side of the baseplate of each foot rest 150, 151 is formed ribbed in each case as is evident from Figs. 16 and 18.

## Claims

1. A device for releasably attaching a kiddy seat (103), case-like container and the like above the rear wheel (109) of a bicycle (101) comprising a supporting frame (116) extending roughly horizontally above said rear wheel (109), two fastener brackets (117, 118) which are each oriented forwards and mounted on the supporting frame (116) longitudinally shiftable (double arrow 123) and which for securing to the saddle tube (105) of said bicycle (101) are each able to bypass the rear wheel fork (106), and further comprising two supporting struts (119, 120) each attached to said supporting frame (116) and the free ends (121, 122) of which are each securable to the two struts (107) of the rear wheel fork (106) of said bicycle (101) **characterized in that** in the installed position each of the fastener brackets (117, 118) is curved downwards towards the saddle tube (105) thus extending outside and past the two struts (107) of the rear wheel fork (106) before being secured to the saddle tube (105) at a point below the connection between the struts (107) of the rear wheel fork (106) and said saddle tube (105), wherein each of the fastener brackets (117, 118) are held within their mounting on the supporting frame (116) rotatable about their longitudinal axes (double arrow 125).

2. A device as set forth in claim 1 wherein the free or forward ends of the fastener brackets (117, 118), whilst forming a connecting section (126) extending roughly horizontally or transversely to the center plane of the bicycle defined by the bicycle frame, are connectable to each other.

3. A device as set forth in claim 2, wherein the connecting section (126) comprises hook-like latching projections (129, 130) which are latchable in a complementary opening (131) of a support (132) secured to the saddle tube (105).

4. A device as set forth in claim 2 or 3, wherein the connecting section (126) is formed as a tubular section which is in contact with a semi-bucket-shaped supporting surface (133) of the support (132) in the latched position of the assigned latching projections (129, 130).

5. A device as set forth in claim 4, wherein the semi-bucket-shaped supporting surface (133) of the support (132) is located on the side opposite the supporting frame (116) or front side of the saddle tube (105) and the supporting surface (133) features a central opening (131) for latching the hook-like latching projections (129, 130).

6. A device as set forth in any of the claims 3 to 5, wherein the hook-like latching projections (129, 130) are formed in particularly as integrally molded bending straps (140, 141) arranged on the connecting section (126), the free ends of the bending straps 140, 141 projecting from the side opposite the insertion side, particularly from the lower side of the latching opening (131) formed in the support (132)

7. A device as set forth in any of the claims 1 to 6, wherein the section of the fastener brackets (117, 118) disposed longitudinally shiftable on the supporting frame (116) is formed with transverse ribs in each case, whereby establishing the relative position between the fastener brackets and the supporting frame is done by means of holding clips (146) effective between two neighboring transverse ribs (145).

8. A device as set forth in claim 7, wherein the holding clip (146) can be anchored, particularly latched in the supporting frame (116), i.e. preferably within an insertion opening (149) extending crosswise to the receiving opening (147, 148) for the fastener brackets (117, 118) in the supporting frame (116).

9. A device as set forth in any of the claims 1 to 8, wherein fastening the supporting struts (119, 120) to the two struts (107) of the rear wheel fork (106) is done in each case via a non-positive action lock (152) which in the closed position (Fig. 10) permits swivelling of the supporting frame (116) in the vertical (bicycle) plane.

10. A device as set forth in claim 9, wherein each lock (152) comprises a latch, particularly a rotary latch (153) which in the open position (Fig. 12) opens up a receiving slot (154) formed on the free end (121, 122) of the supporting struts (119, 120) for a pin, particularly a mushroom-head pin (155) projecting outwardly on the side on the strut (107) of the rear wheel fork (106), and which in the closed position locks or closes off this receiving slot (154) by forming a swivel bearing opening for the pin (155).

11. A device as set forth in claim 10, wherein the latch, particularly rotary latch (155) is latchable in the closed position.

12. A device as set forth in any of the claims 1 to 11, wherein the supporting frame (116) features at least one, particularly two slot-like openings (160) which are accessible from above, each provided with an undercut (161) to receive a toggle-like locking member (162) arranged on the kiddy seat (103).

13. A device as set forth in claim 12, wherein the supporting frame (116) features at its front end at least one, particularly two insertion openings (165, 166) spaced away from each other to receive suitable projections (167, 168) on the kiddy seat (103) and the like and the two slot-like openings (160) for receiving the complementary locking members (162) are each formed in the region of the two rear corners of the supporting frame (116) so that after introducing the projections (167, 168) into the front receiving openings (165, 166) of the supporting frame (116) a kiddy seat and the like can be tilted about them to the rear on the supporting frame (116) for it to be reliably attached to the supporting frame (116) by means of the locking members (162).

14. A device as set forth in claim 12 or 13, wherein on the underside of the kiddy seat (103) and the like a substantially circumferential edge (169) is formed as a curb within which the upper side of the supporting frame (116) is positionable or vice-versa.

15. A device as set forth in one or more of the claims 1 to 14, wherein the supporting struts (119, 120) each feature a plurality of hanger slots (172) located one above the other and each extending in the longitudinal direction of the supporting struts and vertically respectively. for height-adjustable hanging attachment of the foot rests (150, 151), whereby the corresponding anchoring members are formed on the foot rests (150, 151) by an upper hook-like holding projection (173) oriented upwards, a lower hook-like holding projection (174) oriented downwards and by a locking projection (175) which can be introduced in the hanging position of the foot rest (150, 151) into a separate opening (172) on the supporting strut (119, 120) or in a hanger slot (172) located inbetween.

16. A device as set forth in claim 15, wherein the locking projection (175) is formed between the upper and lower holding projection, relative to which it is held pliantly so that for locating the foot rest (150, 151) on a supporting strut (119, 120) first the upper holding projection (173) can be introduced into the hanger slot (172) and with hook attachment to the same with the foot rest is shiftable sufficiently upwards so that the lower holding projection (174) can be introduced into the associated lower hanger slot (172) the foot rest (150, 151) then being shiftable downwards - with hook attachment also of the lower holding projection (174) and simultaneous forcing-away of the locking projection (175) by the facing limiting edge of the supporting strut (119, 120) - sufficiently until the foot rest (150, 151) comes into contact with the bottom edge of the assigned hanger slot (172) by its lower holding projection (174) and the locking projection (175) snaps into place in a correspondingly arranged locking opening or in the hanger slot (172) located inbetween.

17. A device as set forth in claim 16, wherein the spacing between the hanger slot ends facing away from each other of each upper hanger slot assigned to the upper holding projection and of each lower hanger slot assigned to the lower holding projection is made - on the one hand - smaller than the spacing between the free ends of the two holding projections (173, 174) of each foot rest (150, 151), but - on the other hand - greater than the spacing between the free end (178) of the lower holding projection (174) and the upper side (179) of the raised face (180) of the upper holding projection (173) on the foot rest (150, 151) and the rear wall (176) thereof respectively.

18. A device as set forth in claim 15 or 16, wherein an opening (181) is provided in the foot rest (150, 151) and its rear wall (176) resp. through which the locking projection (175) is accessible, particularly by means of one finger and the locking projection (175) is withdrawable from the locking opening in the supporting strut (119, 120) and from the correspondingly assigned hanger slot (172) by overcoming its pliant preloading.

19. A device as set forth in any of the claims 15 to 18, wherein the foot rest (150, 151) is formed as a kind of bucket quadrant, a foot strap (183) being intregally molded on a sidewall (182).

20. A device as set forth in claim 19, wherein the foot strap (183) features transverse ribs (184) - preferably on the outside - and with its free end (185) leading can be introduced into a slot-like opening (186) in the opposite sidewall (187) in which it can be hooked by means of the transverse ribs (184).

21. A device as set forth in any of the claims 1 to 20, wherein the supporting frame (116) including the supporting struts (119, 120) is produced integrally of plastic.

22. A device as set forth in any of the claims 1 to 21, wherein the fastener brackets (117, 118) are produced of tubular plastic or light-alloy.

23. A device as set forth in any of the claims 1 to 22, wherein the saddle tube support (132), the fastener brackets (117, 118), the foot rests (150, 151) and the kiddy seat (103), container and the like are each made of plastic.

## Patentansprüche

1. Vorrichtung zum lösbaren Befestigen eines Kindersitzes (103), eines kastenartigen Behälters und dergleichen über dem Hinterrad (109) eines Fahrrads (101), wobei die Vorrichtung folgendes aufweist einen Tragrahmen (116), der sich grob horizontal über dem Hinterrad (109) erstreckt, zwei Befestigungsarme (117, 118), die jeweils nach vorn orientiert und an dem Tragrahmen (116) in Längsrichtung verschiebbar (Doppelpfeil 123) angebracht sind und die zum Befestigen an dem Sattelrohr (105) des Fahrrads (101) jeweils imstande sind, um die Hinterradgabel (106) herum zu verlaufen, und ferner zwei Stützstreben (119, 120), die jeweils an dem Tragrahmen (116) angebracht sind und deren freie Enden (121, 122) jeweils an den beiden Streben (107) der Hinterradgabel (106) des Fahrrads (101) befestigbar sind, **dadurch gekennzeichnet, daß** in der eingebauten Position jeder der Befestigungsarme (117, 118) nach unten zu dem Sattelrohr (105) gekrümmt ist und sich somit an der Außenseite der beiden Streben (107) der Hinterradgabel (106) und daran vorbei erstreckt, bevor er an dem Sattelrohr (105) an einer Stelle unterhalb des Verbindungspunkts zwischen den Streben (107) der Hinterradgabel (106) und dem Sattelrohr (105) befestigt ist, wobei die Befestigungsarme (117, 118) in ihrer Halterung an dem Tragrahmen (116) jeweils um ihre Längsachsen (Doppelpfeil 125) drehbar gehalten sind.

2. Vorrichtung nach Anspruch 1, wobei die freien oder vorderen Enden der Befestigungsarme (117, 118), während sie einen Verbindungsabschnitt (126) bilden, der sich grob horizontal oder quer zu der durch den Fahrradrahmen definierten Mittelebene des Fahrrads erstreckt, miteinander verbindbar sind.

3. Vorrichtung nach Anspruch 2, wobei der Verbindungsabschnitt (126) hakenartige Verriegelungsvorsprünge (129, 130) aufweist, die in einer komplementären Öffnung (131) einer Halterung (132), die an dem Sattelrohr (105) befestigt ist, verrastbar sind.

4. Vorrichtung nach Anspruch 2 oder 3, wobei der Verbindungsabschnitt (126) als ein rohrförmiger Abschnitt ausgebildet ist, der mit einer halb-becherförmigen Stützfläche (133) der Halterung (132) in der Einrastposition der zugehörigen Verriegelungsvorsprünge (129, 130) in Kontakt ist.

5. Vorrichtung nach Anspruch 4, wobei die halb-becherförmige Stützfläche (133) der Halterung (132) an der dem Tragrahmen (116) entgegengesetzten Seite oder Vorderseite des Sattelrohrs (105) liegt und die Stützfläche (133) eine zentrale Öffnung (131) zum Einrasten der hakenartigen Verriegelungsvorsprünge (129, 130) hat.

6. Vorrichtung nach einem der Ansprüche 3 bis 5, wobei die hakenartigen Verriegelungsvorsprünge (129, 130) insbesondere als integral geformte Biegebügel (140, 141) ausgebildet sind, die an dem Verbindungsabschnitt (126) angeordnet sind, wobei die freien Enden der Biegebügel (140, 141) von der zu der Einführungsseite entgegengesetzten Seite, insbesondere von der unteren Seite der in der Halterung (132) ausgebildeten Verriegelungsöffnung (131), vorspringen.

7. Vorrichtung nach einem der Ansprüche 1 bis 6, wobei der Abschnitt der Befestigungsarme (117, 118), der längsverschiebbar an dem Tragrahmen (116) angeordnet ist, in jedem Fall mit Querrippen ausgebildet ist, so daß die relative Position zwischen den Befestigungsarmen und dem Tragrahmen mit Hilfe von Halteclips (146) bestimmt wird, die zwischen zwei benachbarten Querrippen (145) wirksam sind.

8. Vorrichtung nach Anspruch 7, wobei der Halteclip (146) in dem Tragrahmen (116) verankert, speziell arretiert werden kann, und zwar bevorzugt in einer Einführöffnung (149), die quer zu der Aufnahmeöffnung (147, 148) für die Befestigungsarme (117, 118) in dem Tragrahmen (116) verläuft.

9. Vorrichtung nach einem der Ansprüche 1 bis 8, wobei das Befestigen der Stützstreben (119, 120) an den beiden Streben (107) der Hinterradgabel (106) in jedem Fall über ein nichtformschlüssiges Schloß (152) erfolgt, das in der geschlossenen Position (Fig. 10) ein Schwenken des Tragrahmens (116) in der vertikalen (Fahrrad-)Ebene zuläßt.

10. Vorrichtung nach Anspruch 9, wobei jedes Schloß (152) eine Klinke, insbesondere eine drehbare Klinke (153) aufweist, die in der offenen Position (Fig. 12) einen Aufnahmeschlitz (154), der an dem freien Ende (121, 122) der Stützstreben (119, 120) ausgebildet ist, für einen Stift, insbesondere einen Flachrundkopfstift (155) öffnet, der an der Seite an der Strebe (107) der Hinterradgabel (106) nach außen vorspringt, und die in der geschlossenen Position diesen Aufnahmeschlitz (154) durch Bilden einer Schwenklageröffnung für den Stift (155) verschließt oder abschließt.

11. Vorrichtung nach Anspruch 10, wobei die Klinke, speziell drehbare Klinke (155), in der geschlossenen Position arretierbar ist.

12. Vorrichtung nach einem der Ansprüche 1 bis 11, wobei der Tragrahmen (116) wenigstens eine, insbesondere zwei schlitzähnliche Öffnungen (160) aufweist, die von oben zugänglich und jeweils mit einer Unterschneidung (161) versehen sind, um ein an dem Kindersitz (103) angeordnetes kniehebelartiges Arretierelement (162) aufzunehmen.

13. Vorrichtung nach Anspruch 12, wobei der Tragrahmen (116) an seinem Vorderende wenigstens eine, insbesondere zwei Einführöffnungen (165, 166) aufweist, die voneinander beabstandet sind, um geeignete Vorsprünge (167, 168) an dem Kindersitz (103) und dergleichen aufzunehmen, und wobei die zwei schlitzähnlichen Öffnungen (160) zur Aufnahme der komplementären Arretierelemente (162) jeweils in dem Bereich der beiden hinteren Ecken des Tragrahmens (116) ausgebildet sind, so daß nach dem Einführen der Vorsprünge (167, 168) in die vorderen Aufnahmeöffnungen (165, 166) des Tragrahmens (116) ein Kindersitz und dergleichen um sie herum nach rückwärts an dem Tragrahmen (116) gekippt werden kann, so daß er mittels der Arretierelemente (162) zuverlässig an dem Tragrahmen (116) befestigt ist.

14. Vorrichtung nach Anspruch 12 oder 13, wobei an der Unterseite des Kindersitzes (103) und dergleichen ein im wesentlichen um den Umfang verlaufender Rand (169) als eine Einfassung geformt ist, innerhalb welcher die obere Seite des Tragrahmens (116) positionierbar ist, oder umgekehrt.

15. Vorrichtung nach einem oder mehreren der Ansprüche 1 bis 14, wobei die Stützstreben (119, 120) jeweils eine Vielzahl von Einhängeschlitzen (172) haben, die einzeln übereinander positioniert sind und jeweils in der Längsrichtung der Stützstreben bzw. vertikal verlaufen, um die Fußstützen (150, 151) höhenverstellbar hängend anzubringen, wobei die entsprechenden Verankerungselemente an den Fußstützen (150, 151) gebildet sind durch einen oberen hakenartigen Haltevorsprung (173), der nach oben orientiert ist, einen unteren hakenartigen Haltevorsprung (174), der nach unten orientiert ist, und durch einen Arretiervorsprung (175), der in der Hängeposition der Fußstütze (150, 151) in eine separate Öffnung (172) an der Stützstrebe (119, 120) oder in einen dazwischen liegenden Einhängeschlitz (172) einführbar ist.

16. Vorrichtung nach Anspruch 15, wobei der Arretiervorsprung (175) zwischen dem oberen und dem unteren Haltevorsprung ausgebildet ist, relativ zu welchem er biegbar gehalten ist, so daß zum Festlegen der Fußstütze (150, 151) an einer Stützstrebe (119, 120) zuerst der obere Haltevorsprung (173) in den Einhängeschlitz (172) eingeführt werden kann und unter Hakenbefestigung an demselben mit der Fußstütze ausreichend weit nach oben verlagerbar ist, so daß der untere Haltevorsprung (174) in den zugehörigen unteren Einhängeschlitz (172) der Fußstütze (150, 151) eingeführt werden kann und dann nach unten ausreichend weit verlagerbar ist - ebenfalls unter Hakenbefestigung des unteren Haltevorsprungs (174) und gleichzeitigem Wegdrücken des Arretiervorsprungs (175) durch den zugewandten Begrenzungsrand der Stützstrebe (119, 120) -, bis die Fußstütze (150, 151) mit dem unteren Rand des zugeordneten Einhängeschlitzes (172) über ihren unteren Haltevorsprung (174) in Berührung gelangt und der Arretiervorsprung (175) in einer entsprechend angeordneten Arretieröffnung oder in dem dazwischen befindlichen Einhängeschlitz (172) in seine Lage schnappt.

17. Vorrichtung nach Anspruch 16, wobei der Abstand zwischen den voneinander weg weisenden Schlitzenden jedes oberen Einhängeschlitzes, der dem oberen Haltevorsprung zugeordnet ist, und jedes unteren Einhängeschlitzes, der dem unteren Haltevorsprung zugeordnet ist, einerseits kleiner als der Abstand zwischen den freien Enden der beiden Haltevorsprünge (173, 174) jeder Fußstütze (150, 151) gemacht ist, jedoch andererseits größer als der Abstand zwischen dem freien Ende (178) des unteren Haltevorsprungs (174) und der oberen Seite (179) der erhöhten Fläche (180) des oberen Haltevorsprungs (173) an der Fußstütze (150, 151) bzw. seiner Rückwand (176) gemacht ist.

18. Vorrichtung nach Anspruch 15 oder 16, wobei eine Öffnung (181) in der Fußstütze (150, 151) bzw. ihrer Rückwand (176) vorgesehen ist, durch die der Arretiervorsprung (175) zugänglich ist, und zwar insbesondere mit einem Finger, und wobei der Arretiervorsprung (175) aus der Arretieröffnung in der Stützstrebe (119, 120) und aus dem entsprechend zugeordneten Einhängeschlitz (172) herausziehbar ist, indem seine elastische Vorspannung überwunden wird.

19. Vorrichtung nach einem der Ansprüche 15 bis 18, wobei die Fußstütze (150, 151) als eine Art von Becherquadrant geformt ist, wobei ein Fußgurt (183) an einer Seitenwand (182) integral angeformt ist.

20. Vorrichtung nach Anspruch 19, wobei der Fußgurt (183) Querrippen (184) - bevorzugt an der Außenseite - aufweist und mit seinem freien Ende (185) zuerst in eine schlitzartige Öffnung (186) in der gegenüberstehenden Seitenwand (187) einführbar ist, in der er mittels der Querrippen (184) verrastet werden kann.

21. Vorrichtung nach einem der Ansprüche 1 bis 20, wobei der Tragrahmen (116) einschließlich der Stützstreben (119, 120) integral aus Kunststoff hergestellt ist.

22. Vorrichtung nach einem der Ansprüche 1 bis 21, wobei die Befestigungsarme (117, 118) aus rohrförmigem Kunststoff oder Leichtmetall hergestellt sind.

23. Vorrichtung nach einem der Ansprüche 1 bis 22, wobei die Sattelrohrhalterung (132), die Befestigungsarme (117, 118), die Fußstützen (150, 151) und der Kindersitz (103), Behälter und dergleichen jeweils aus Kunststoff hergestellt sind.

## Revendications

1. Dispositif pour la fixation amovible d'un siège d'enfant (103) d'un récipient en forme de coffre et similaire au-dessus de la roue arrière (109) d'une bicyclette (101) comprenant un châssis de support (116) s'étendant pratiquement horizontalement au-dessus de ladite roue arrière (109), deux supports de fixation (117, 118) qui sont chacun orientés vers l'avant et montés sur le châssis de support (116) deplaçable longitudinalement (double flèche 123) et qui, pour se fixer au tube de selle (105) de ladite bicyclette (101) peuvent chacun contourner la fourche de roue arrière (106), et comprenant en outre deux montants de support (119, 120) fixés chacun audit châssis de support (116) et dont les extrémités libres (121, 122) peuvent chacune être fixées à deux montants (107) de la fourche de roue arrière (106) de ladite bicyclette (101), caractérisé en ce que en position installée, chacun desdits supports de fixation (117, 118) est courbée vers le bas vers le tube de selle (105) s'étendant ainsi vers l'extérieur et au-delà des deux montants (107) de la fourche de roue arrière (106) avant d'être fixés au tube de selle (105) en un point situé au-dessous de la liaison entre les montants (107) de la fourche de roue arrière (106) et ledit tube de selle (105), en ce que chacun desdits supports de fixation (117, 118) est maintenu pivotant à l'intérieur de leur montage sur le châssis de support (116) autour de leurs axes longitudinaux (double flèche 125).

2. Dispositif selon la revendication 1, dans lequel les extrémités libres ou avant desdits supports de fixation (117, 118) formant une section de liaison (126) s'étendant pratiquement horizontalement ou transversalement au plan central de la bicyclette définie par le cadre de la bicyclette, peuvent être reliées l'une à l'autre.

3. Dispositif selon la revendication 2 dans lequel la section de liaison (126) comporte des saillies de verrouillage en forme de crochet (129, 130) qui peuvent être verrouillées dans une ouverture complémentaire (131) d'un support (132) fixé au tube de selle (105).

4. Dispositif selon l'une des revendications 2, 3, dans lequel la section de liaison (126) a une forme tubulaire qui est en contact avec une surface de support (133) en forme de demi-calotte du support (132) en position verrouillée des saillies de verrouillage correspondantes (129, 130).

5. Dispositif selon la revendication 4, dans lequel la surface de support (133) en forme de demi-calotte du support (132) est située du côté opposé au bâti de support (116) ou sur le côté avant du tube de selle (105) et la surface de support (133) comporte une ouverture centrale (131) pour verrouiller les saillies de verrouillage (129, 130) en forme de crochet.

6. Dispositif selon l'une des revendications 3 à 5, dans lequel les saillies de verrouillage (129, 130) en forme de crochet présentent en particulier une forme de languette de flexion (140, 1441) venu de moulage disposée sur la section de liaison (126) les extrémités libres des languettes de flexion (140, 141) faisant saillie des côtés opposés au côté d'insertion, en particulier du côté inférieur de l'ouverture de verrouillage (131) formée dans le support (132).

7. Dispositif selon l'une des revendications 1 à 6, dans lequel la section des supports de fixation (117, 118) déplaçable longitudinalement sur le châssis de support (116) est formée avec des nervures transversales dans chaque cas de manière à définir la position relative entre les supports de fixation et le châssis de support au moyen de pinces de maintien (146) agissant entre deux nervures transversales voisines (145).

8. Dispositif selon la revendication 7, dans lequel la pince de maintien (146) peut être ancré, en particulier verrouillé, dans le châssis de support (116), c.-à-d. de préférence à l'intérieur d'une ouverture d'insertion (149) s'étendant transversalement à l'ouverture de réception (147, 148) pour les supports de fixation (117, 118) dans le châssis de support (116).

9. Dispositif selon les revendications 1 à 8 dans lequel la fixation des montants de support (119, 120) aux deux montants (107) de la fourche de roue arrière (106) est réalisée dans chaque cas par un verrou à action non rigide (152) qui, en position fermée, (fig. 10) permet le pivotement du châssis de support (116) dans le plan vertical (de la bicyclette).

10. Dispositif selon la revendication 9, dans lequel chaque élément de verrouillage (152) comporte un verrou, en particulier un verrou rotatif (153) qui, en position ouverte, (fig. 12) révèle une encoche de réception (154) formée sur l'extrémité libre (121, 122) des montants de support (119, 120) pour une cheville, particulièrement une cheville à tête renflée (155) faisant saillie vers l'extérieur, latéralement aux montants (107) de la fourche de roue arrière (106), et qui, dans la position fermée verrouille ou referme cette fente réceptrice (154) en formant une ouverture de palier pivotant pour la cheville (155).

11. Dispositif selon la revendication 10, dans lequel le verrou, en particulier le verrou rotatif (155) est verrouillable en position fermée.

12. Dispositif selon l'une des revendications 1 à 11, dans lequel le châssis de support (116) comporte au moins une, en particulier deux ouvertures (160) en forme d'encoche qui sont accessibles de dessus, chacune munie d'une entaille (161) pour recevoir un organe de verrouillage en forme de cabillot (162) disposé sur le siège d'enfant (103).

13. Dispositif selon la revendication 12, dans lequel le châssis de support (116) comporte à son extrémité avant au moins une, en particulier deux ouvertures d'insertion (165, 166) espacées l'une de l'autre pour recevoir des saillies appropriées (167, 168) du siège d'enfant (103) et similaire et les deux ouvertures (160) en forme d'encoche pour recevoir les organes de verrouillage complémentaires (162) sont formées chacune dans la zone des deux angles arrière du châssis de support (116) de sorte qu'après l'introduction des saillies (167, 168) dans les ouvertures réceptrices avant (165, 166) du châssis de support (116) un siège d'enfant et similaire peut être incliné vers l'arrière autour d'elles sur le châssis de support (116) pour y être fixé de façon solide au châssis de support (116) au moyen des organes de verrouillage (162).

14. Dispositif selon l'une des revendications 10 ou 13, dans lequel sur la face inférieure du siège d'enfant (103) et similaire, un rebord pratiquement circulaire (169) est formé comme une bordure dans laquelle le côté supérieur du châssis de support (116) peut être positionné ou vice-versa.

15. Dispositif selon une ou plusieurs des revendications 1 à 14, dans lequel les montants de support (119, 120) comportent chacun une pluralité de rainures de suspension (172) disposées l'une au-dessus de l'autre et s'étendant chacune dans la direction longitudinale des montants de support et verticalement respectivement pour la suspension ajustable en hauteur et la fixation des repose-pieds (150, 151), les organes d'ancrage correspondant étant formés sur les repose-pieds (150, 151) par une saillie de retenue supérieure en forme de crochet (173) orienté vers le haut, une saillie de retenue inférieure en forme de crochet (174) orienté vers le bas et par une saillie de verrouillage (175) qui peut être introduite en position suspendue du repose-pied (150, 151) dans une ouverture séparée (172) du montant de support (119, 120) ou dans une encoche de suspension (172) située entre elles.

16. Dispositif selon la revendication 15, caractérisé en ce que la saillie de verrouillage (175) est formée entre les saillies de retenue supérieure et inférieure, par rapport auxquelles elle est tenue élastiquement de sorte que pour positionner le repose-pied (150, 151) sur un montant de support (119, 120) la saillie de retenue supérieure peut être tout d'abord introduite dans l'encoche de suspension (172) et avec la fixation à crochet le repose-pied est suffisamment déplaçable vers le haut de sorte que la saillie de retenue inférieure (174) peut être introduite dans l'encoche de suspension inférieure associée (172) le repose-pied (150, 151) étant ensuite déplaçable vers le haut - également avec la fixation à crochet de la saillie de retenue inférieure (174) et en provoquant simultanément l'écartement de la saillie de verrouillage (175) par le bord limitant la face du montant de support (119, 120) - suffisamment jusqu'à que le repose-pied (150, 151) vienne en contact avec le bord inférieur de l'encoche de suspension correspondante (172) par sa saillie de retenue inférieure (174) et que la saillie de verrouillage (175) s'enclenche dans une ouverture de verrouillage correspondante ou dans l'encoche de suspension (172) située entres elles.

17. Dispositif selon la revendication 16, dans lequel l'écartement entre les extrémités des encoches de suspension se faisant face l'une l'autre dans chaque encoche de suspension supérieure destinée à la saillie de retenue supérieure et de chaque encoche de suspension inférieure destinée à la saillie inférieure est dimensionnée - d'une part - inférieure à l'écartement entre les extrémités libres des deux saillies de retenue (173, 174) de chaque repose-pied (150, 151) mais - d'autre part - supérieure à l'écartement entre l'extrémité libre (178) de la saillie de retenue inférieure (174) et le côté supérieur (179) de la face surélevée (180) de la saillie de retenue supérieure (173) du repose-pied (150, 151) et la paroi arrière (176) de celui-ci respectivement.

18. Dispositif selon l'une des revendications 15 et 16, dans lequel une ouverture (181) est ménagée sur le repose-pied (150, 151) et sa paroi arrière (176) respectivement à travers laquelle la saillie de verrouillage (175) est accessible, en particulier à l'aide d'un doigt et la saillie der verrouillage (175) peut être dégagée de l'ouverture de verrouillage du montant de support (119, 120) et de l'encoche de suspension correspondante (172) en surmontant sa précontrainte élastique.

19. Dispositif selon l'une des revendications 15 à 18, dans lequel le repose-pied (150, 151) est formé comme un espèce de godet quadrangulaire, une sangle de pied (183) étant moulée d'une pièce avec une paroi latérale (182).

20. Dispositif selon la revendication 19, dans lequel la sangle de pied (183) présente des nervures transversales (184) - de préférence sur la face externe - et avec son extrémité libre avant (185) peut être introduite dans une ouverture en forme d'encoche (186) dans la paroi latérale opposée (187) dans laquelle elle peut être crochée aux moyens des nervures transversales (184).

21. Dispositif selon l'une des revendications 1 à 20, caractérisé en ce que le châssis de support (116) comprenant les montants de support (119, 120) est produit d'une seule pièce de plastique.

22. Dispositif selon l'une des revendications 1 à 21, dans lequel les supports de fixation (117, 118) sont réalisés en un plastique tubulaire ou un alliage léger.

23. Dispositif selon l'une des revendications 1 à 22, dans lequel le support de tube de selle (132) les supports de fixation (117, 118) les repose-pieds (150, 151) et le siège d'enfant (103), le récipient et similaire sont chacun fait de plastique.
